# EUROPEAN PATENT APPLICATION

(11) **EP 0 805 012 A1**
(43) Date of publication of application: **05.11.1997**
(21) Application number: 97500046.4
(22) Date of filing: 13.03.1997
(51) Int. Cl.: B29C 45/00, B29C 45/73

(54) **Procedure to manufacture preforms with integrated handles, preforms, and containers that are achieved with them**

(30) Priority: 30.04.1996 ES 9600977
(71) Applicant: Santoyo Padilla, Jose, 08186 Lliça D'Aumunt (Barcelona) (ES)
(72) Inventor: Santoyo Padilla, Jose, 08186 Lliça D'Aumunt (Barcelona) (ES)
(74) Representative: Perez Bonal, Bernardo

(57) **Abstract**

The injection mold (1) incorporates a lateral upper ridge (2) at a tangent and in proximity to its own mouth, as well as a single distributor (7) for the refrigerant fluid, with concentric rings or channels (8) joined to other connecting channels (9), at intervals between levels, in such a way as to arrange these second vertical channels (9) between each grouping of two of these, and placing the one from the previous level and the next one 180 degrees from it, and incorporating a groove (5) in the area closest to the neck, opposite the ridge (2) of the mold (1), which delineates an elastic cut-off of the integrated handle (3).

## Description

### OBJECT OF THE INVENTION

This current invention refers to a procedure to manufacture preforms with integrated handles, preforms, and containers that are achieved by them, manufactured by injection and blowing, or by injection and bi-directional blowing of plastic material or of similarly transformable material, specially conceived to achieve preforms that have a handle for conventional bottle transportation, thus, the preform will be formed as a single integrated body.

This procedure for achieving the preform by injection, with subsequent blowing until the container is achieved, whether by cooling prior to removal from the mold or by cooling following removal, as long as the definitive container is to be formed immediately after achieving the preform.

Likewise, it deals with facilitating the recycleability of the bottle, as a consequence of the integration of the body and the two handles into a single set, made of the same material.

This procedure and this preform are characterized by a special mold construction which specifies a laminate handle arising from the neck of the preform, as well as by the incorporation of a groove in the area of the handle closest to the neck, which delineates the cut-off of this handle.

This cut-off makes possible blowing the preform in a single piece, absorbing, through an opening in the mold that forms the groove, the tensions caused during the blowing of the preform.

### BACKGROUND OF THE INVENTION

Bottles of plastic material are generally formed by the technique of blowing the preform previously shaped by injection with the shape of the subject bottle, by cooling the former, usually up to 105 degrees Centigrade and also up to 90 degrees Centigrade, and by stretching it subsequently by blowing inside a mold or cavity of specified shapes matching the appearance of the bottle, attaining that appearance in a size larger than that of the original preform from which it came, which would be limited by the blowing mold itself, all in a continuous process.

The preform can also be manufactured, warehoused, and subsequently reheated, to be shaped into the definitive container, in a two-stage manufacturing process.

The intention of any container preform, manufactured by any of the plastic container injection procedures, is either to achieve just the body of the bottle or to manufacture the bottle together with the handle, subsequently added, using molds for that which group together an ever increasing number of preforms; we are talking now about gigantic machines that can manufacture a group of 2 x 96 preforms at a time.

Generally, the handle is formed of a material different than the bottle' s, which involves an inconvenience in the recycling process of the plastic material as a consequence of the need to effect the prior separation of the two components to be treated independently.

Even thougt there may be inventions registered which claim the manufacturing procedures for preforms with handles, both integral and simultaneous, and not by the addition of the handle to the hot mass of the preform, since these preforms do not exist either, susceptible to an alternative and not-differentiated manufacture of the containers, whether only in one stage or in two stages set apart in time and geographically, no manufacturing procedure is currently known by which, even though the handle itself is integrated into the plastic preform from which the container is achieved, there is no handle available provided with a cut-off in the area where it connects with the neck which would allow for blowing without tension to the preform, as well as the handling for transportation and even for the wrong use of the handle, without damaging it or the container itself, as is the case of the invention described next.

### DESCRIPTION OF THE INVENTION

This current invention, a procedure to manufacture preforms with integrated handles, preforms and the containers that are achieved with them, by injection and blowing or by injection and bi-directional blowing, optimizes to the utmost the conditions for the production of plastic and similarly transformable material containers which incorporate a handle, in a way that drastically reduces the steel mass and, along with it, the cost of refrigerating the preform, becoming less than one hundredth of the conventional cost.

Likewise, it optimizes the recycleability of the plastic material used to shape it, through the adoption of a preform that integrates the handle to the body itself which will form part of the body of the bottle once the preform is expanded by the blowing procedure, by doing this without causing tension to the neck or the handle, which could cause weakening in either one.

Likewise, costs reduction is achieved as a consequence of the production of the body and the handle in one sole piece.

The preform is shaped by injection to the desired contour which, once heated and stretched out by blowing, whether by prior bi-directional straining of its molecules or not, increases in size on the inside of a mold shaped to the appropriate dimensions and structure to limit the preform while in the expansion process, thus making the bottle and the handle into a single body of the same material.

The handle for transportation, as well as the neck with the mouth with which to fill it, are formed in the preform in the shape and dimensions sought to be achieved after the rest of the set has expanded, with a laminate construction, with a wide centric perforation for better grasping and, during manufacturing, arranged vertically and parallelly to the generatrices of the preform so that, after its manufacture, it can be spread out instantly for its immediate polymerization, and so the body of the bottle juts out perpendicularly, completely elastic, in spite of or even being manufactured in PET.

This handle incorporates a groove in the area closest to the neck, which delineates the cut-off of same, a cut-off which allows for blowing the preform into a single piece, absorbing the tensions caused during the blowing of the preform through the opening in the mold that forms the groove, tensions caused during the blowing of the preform, through which deformities and damages to the handle or, worse yet, to the neck itself, are avoided.

### DESCRIPTION OF DRAWINGS

To complement the description being given, and for the purpose of leading to a better understanding of the characteristics of the invention, attached to this descriptive account and as an integral part of same, is set of plans where the following illustrative, but not limitative, characteristics have been represented:

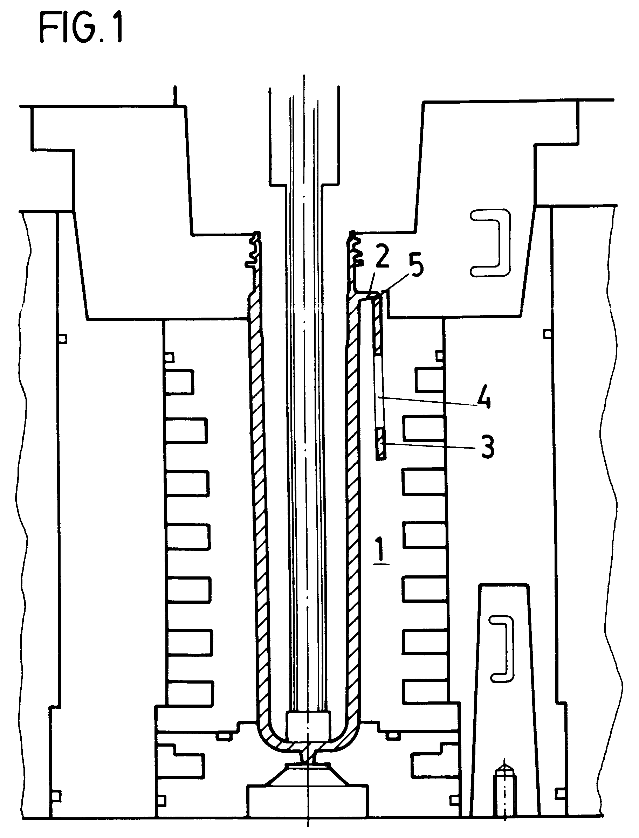

Figure 1 shows a sectional view from the top of the preform of a bottle, with handle for transportation, as well as a partial section of the mold with its incorporated refrigeration systems.

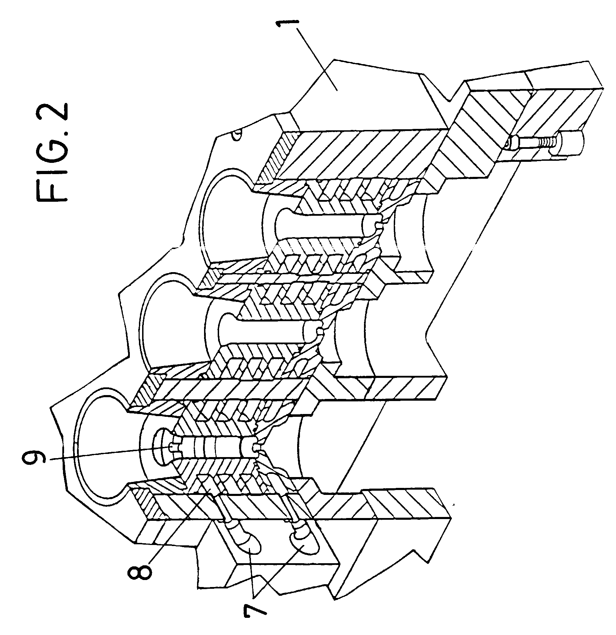

Figure 2 shows a perspective view with a partial section of a blowing mold for three preforms, this time without a handle, with a single refrigerant entrance and exit for the three housings and schematic distribution ofthe refrigerant substance in interconnected ring-shaped channels, arranged at regular, alternating intervals.

### DESCRIPTION OF THE PREFERRED EMBODIMENTS

By seeing the figures, a practical example of a possible execution of the invention is described, consisting of a procedure to manufacture preforms with integrated handles, preforms and containers that are achieved with them, by injection and blowing or by injection and bi-directional blowing, of the preforms that integrate the handle into the body itself, which shall make up the body of the bottle once the preform is expanded by the blowing procedure, whether by prior bi-directional straining of its molecules or not, characterized by incorporating a lateral upper ridge (2) to the injection mold (1) at a tangent and in proximity to its own mouth, as well as a single distributor (7) for the entrance and exit of the refrigerant fluid, for each group, up to 12 preforms, with interior distribution of the refrigerant, either through spirals or through concentric rings and channels (8) or in some other way, to capture the temperature of the metal of the mold through a symmetrical figure that has other connection channels (9), intervals between levels, in such a way as to arrange these second vertical channels (9) between each grouping of two of these, and placing the one from the previous level and the next one 180 degrees from it.

The handle (3) is of laminate construction, with a wide centric perforation (4) for grasping, jutting out perpendicular to the body of the preform, and incorporating a groove (5) in the area closest to the neck which, during manufacturing, is arranged vertically and parallelly to the generatrices of the preform so that, after its manufacture, it can be spread out instantly for its immediate polymerization, for the purpose of giving it great elasticity and later, to remain jutting out of the body of the bottle, perpendicular to it.

The groove (5) or cut-off opposite the ridge (2) of the mold (1) allows for blowing the preform in a single piece, without deformities or damages to the handle, nor to the neck itself, in a consecutive, integral operation.

If the blowing takes place in a subsequent operation and with a different machine, only for blowing and not for injection, the mold does not have to be a mold that needs to be taken apart, based on the availability, in this blowing mold, of a replica of the lateral upper ridge (2) at a tangent and in the proximity of the mouth of the blowing mold (6) itself.

It is not considered necessary to make this summary more extensive in order for any expert in the matter to understand the scope of the invention and the advantages derived from it.

The materials, form, size and arrangement of the elements would be susceptible to changes as long s the essence of the invention is not changed.

The terms in which this account has been described should always be perceived in their wide, not limited, meanings.

## Claims

1. Procedure to manufacture preforms with integrated handles, by injecting and blowing, or by injecting and bi-directional blowing, of the preforms which integrate the handle into the body itself which shall make up the body of the bottle once the preform has expanded due to the blowing procedure, whether by prior bi-directional straining of its molecules, or not, essentially characterized by incorporating a lateral upper ridge (2) to the injection mold (1) at a tangent and in proximity to its own mouth, as well as by incorporating to this mold (1) a single distributor (7) for the entrance and exit of the refrigerant fluid, for each specific group of preforms, with interior distribution of the refrigerant, either through spirals or through concentric rings or channels (8) or in some other way, to capture the temperature of the metal of the mold through a symmetrical figure that has other connection channels (9), intervals between levels, in such a way as to arrange these second vertical channels (9) between each grouping of two of these, and placing the one from the previous level and the next one 180 degrees from it.

2. Preform with integrated handle, as per the previous claim, characterized in that the handle (3) is of laminate construction, with a wide centric perforation (4) for grasping, jutting out perpendicular to the body of the preform, and incorporating a groove (5) in the area closest to the neck, opposite the ridge (2) of the mold (1), which delineates the cut-off.

3. Preform with integrated handle, as per the previous claim, characterized in that in its differentiated manufacture, the handle (3) is arranged vertically and parallelly to the generatrices of the preform so that, after its manufacture, it can be spread out instantly for its immediate polymerization, for the purpose of giving it great elasticity and later, to remain jutting out of the body of the preform and perpendicular to it.

4. Container, as per the previous claims, made without deformities or damages, either to the handle or to the neck itself, characterized in that the cut-off of the handle (3) allows for blowing the preform into a single piece and in a mold that does not need to be taken apart, based on the availability, in the blowing mold, of a replica of the lateral upper ridge (2) at a tangent and in the proximity of the mouth of the blowing mold (6) itself.

5. Container, as per previous claim 3, of those that immediately shape themselves to the preform, chracterized in that the handle (3) is instantly spread out for its immediate polymerization, for the purpose of giving it great elasticity, after the container is shaped, and later, to remain jutting out of the body of the bottle and perpendicular to it.
